# EUROPEAN PATENT APPLICATION

(11) **EP 3 708 293 A1**
(43) Date of publication of application: **16.09.2020**
(21) Application number: 19205953.3
(22) Date of filing: 29.10.2019
(51) Int. Cl.: B23P 15/00, A45D 33/00, A45D 34/04, A45D 40/22

(54) **CONTAINER AND RELATED PRODUCTION METHOD**

(30) Priority: 13.03.2019 IT 201900003647
(71) Applicant: O.M.Z. Officina Meccanica Zanotti S.p.A., 26013 Crema (IT)
(72) Inventor: PEROLINI, Pietro, 26013 Crema (CREMONA) (IT)
(74) Representative: Tansini, Elio Fabrizio

(57) **Abstract**

Container in particular for cosmetic or pharmaceutical products and related production method wherein at least one bar is provided which is made of metal or metal alloy, said bar being turned to obtain a main body (2) having a substantially tubular shape and internally defining a compartment (3) for housing the cosmetic or pharmaceutical product, and
a closing body (4) having a substantially tubular shape and having an engagement opening (5) associable with an access opening to the compartment defined in said main body; said container being uniquely made of metal or metal alloy.

## Description

The present invention relates to a container and related production method.

In particular, the present invention relates to a container, and related production method, preferably used in the cosmetic or pharmaceutical field for the containment of liquid, semi-liquid or pasty products, such as mascara, lip gloss, lipsticks, enamels, etc.

It should be specified that the present invention is however applied in multiple contexts in which it is necessary to provide a container for products that must not be polluted or tampered with by the containment material.

As known, containers for cosmetic or pharmaceutical products, consist of a substantially cylindrical body, generally made of plastic and defining internally a containment chamber of the same product.

The body has a closed bottom end and an open upper end for accessing the containment chamber of the product. From the open end a threaded collar generally emerges for the coupling of a respective closing plug. The plug can in turn be associated with an applicator (for example a brush or a blade), immersed in the product in the closed condition of the container, and suitable for retaining the cosmetic product and distribute it on the affected part.

The body also has an outer surface properly shaped and provided with writing, logos or other chromatic/ornamental effects suitable to give the whole product a particular aesthetic effect.

Such an aesthetic effect is however limited to the structure and material of the cylindrical body. In this respect, it should be considered that the plastic material used for the production of the body must necessarily have specific characteristics suitable not to alter the chemical composition of the product contained in the body itself, shall be the product impaired.

Consequently, the selection of materials is limited, as well as the possibility of obtaining different aesthetic effects.

For this reason, containers made up of several elements made of materials suitably chosen for their function, are provided.

In this way, while the cylindrical body can be made of a material suitable for containing the cosmetic product but without any particular aesthetic features (plastic material), the cover element is specially designed to give a greater ornamental value to the entire product.

Accordingly, cover elements also having a predominantly cylindrical conformation and being internally hollow to hold the body are manufactured.

These elements are made of metallic material (or similar materials) which can have multiple solutions in terms of external colouring or shaping.

To obtain the desired shape, the cover elements are obtained by a moulding or drawing process starting from a sheet of metal material.

In particular, according to the shape to be obtained, the moulds are properly arranged to plastically deform the metal sheet, thus obtaining the internally hollow cylindrical conformation. In addition, this process allows to obtain ornamental patterns raised on the outer surface of the cover element.

However, this method, although capable of obtaining cover elements provided with particular ornamental effects, has important drawbacks.

It should be considered that a sheet of very thin metal is used to facilitate the aforementioned shaping moulding or drawing processes of the element. In this way, the plastic deformation of the sheet takes place in a quicker and simpler way, and thus becomes much less expensive.

However, the use of a very thin sheet appears to be limiting in terms of material selection and for the production of very different products and which may also require higher thicknesses of the container.

It should also be considered that the printing of the cover element is a non-versatile process, as it involves the production of suitably shaped moulds. Consequently, for each modification in the shaping of the cover element, it is associated a change of the respective moulds with the resulting disadvantages in terms of general costs of production of each container.

A further important drawback of the known containers described above derives precisely from the difficulty in disposing of the container composed of materials of different nature.

The increasingly stringent regulations in terms of environmental sustainability, in fact, impose the need to use easily disposable and recyclable containers. In this context, the presence of more metallic and plastic materials requires to separate the container at the end of its use in order to provide for its own disposal. Moreover, the presence of plastic does not ensure the total recyclability of the container with the consequent drawbacks in terms of the ability of recovering of the raw material.

Object of the present invention is therefore to provide a container and related production method which is capable of solving the above-mentioned problems.

In the first place, an object of the present invention is to provide a container and related production method which can be easily disposable of since it is made of a single material, thus eliminating plastic, glass or other materials that are not totally recyclable.

A further object of the present invention is to provide a production method of containers for cosmetic or pharmaceutical products that is versatile and capable of being adaptable, in a simple and cheap way, to the various aesthetic characteristics that the container must exhibit.

In addition, it is an object of the present invention to provide a method that is simple, fast, and able to eliminate the costs of producing moulds.

The mentioned technical task and the specified objects are substantially achieved by a container and related production method comprising the technical specifications set out in one or more of the appended claims.

Further characteristics and advantages of the present invention will become more apparent from the exemplary, and therefore non-limiting, description of a preferred, yet not exclusive, embodiment of a container and related production method of the type illustrated in the appended drawings, wherein:
- figure 1 shows a longitudinal sectional view of a container according to a first embodiment of the present invention;
- figure 1a is a longitudinal sectional and exploded view of the container of figure 1;
- figure 2 shows a longitudinal sectional view of a container according to a second embodiment of the present invention;
- figure 2a shows a longitudinal sectional and exploded view of the container of figure 2 obtained by means of a first production method;
- figure 3 shows a longitudinal sectional view of a container according to a third embodiment of the present invention;
- figure 3a shows a longitudinal sectional and exploded view of the container of figure 3 obtained by means of a second production method.

With reference to the appended figures, reference numeral 1 refers, as a way of example, to a container especially for cosmetic or pharmaceutical products according to the present invention.

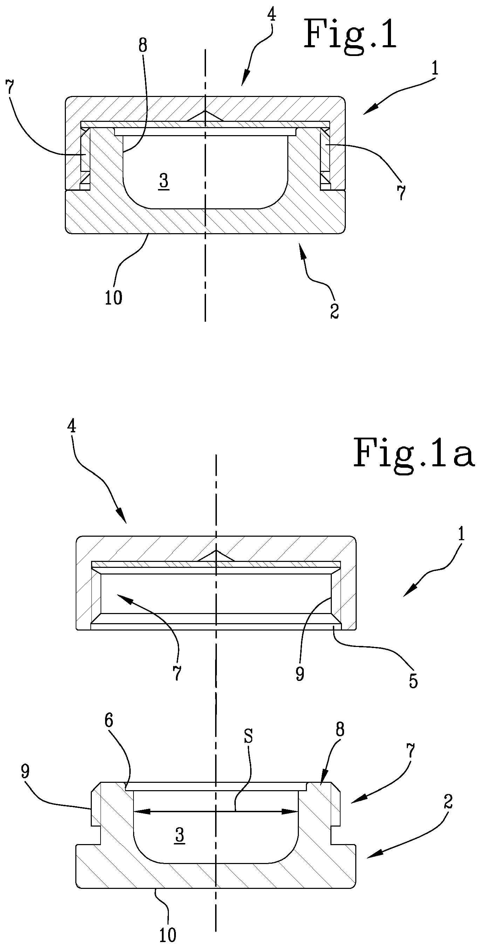

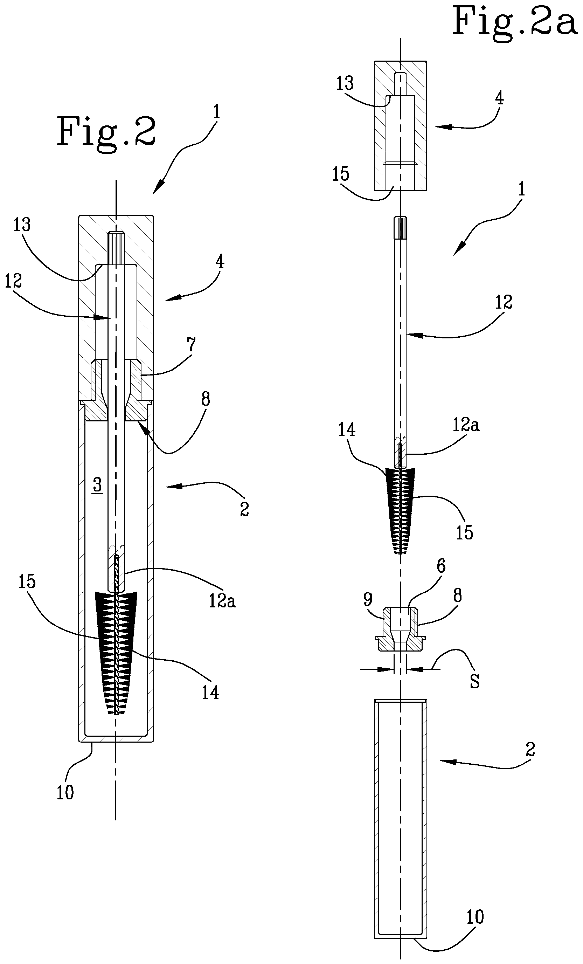

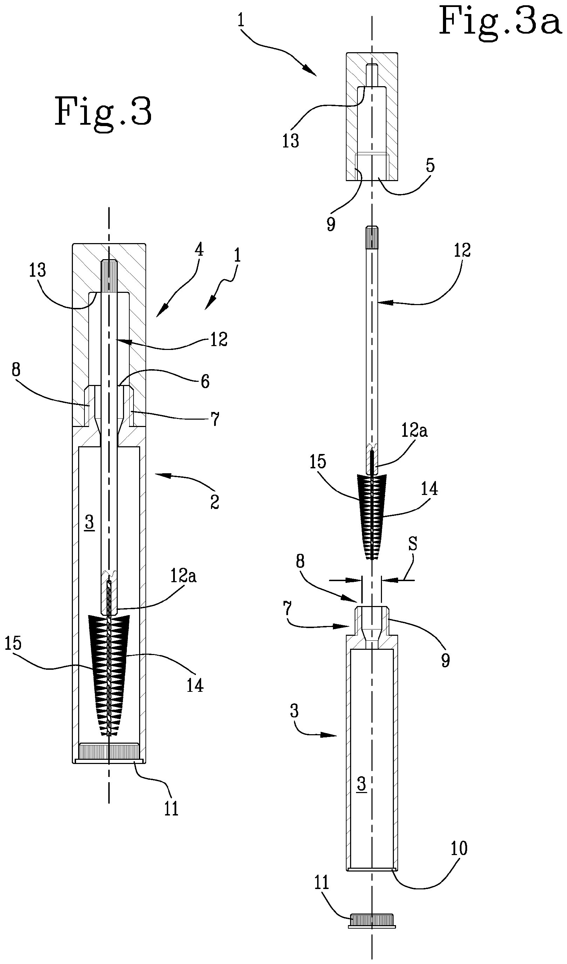

It should be specified that the container 1 of the present invention can be used in any field and is advantageously used for containing liquid, pastry or powder products, which must not be contaminated by the containment material. Typically, these technical fields are just cosmetic and pharmaceutical. Purely by way of example and therefore without limitation, containers 1 for cosmetic use are illustrated in the accompanying figures. In particular, figure 1 shows a container for cosmetic creams and in figures 2 and 3 containers for mascara are illustrated.

The container 1 comprises a main body 2 having a substantially tubular shape and internally defining a compartment 3 for housing the cosmetic product (or pharmaceutical or other product of different nature).

A closing body 4 having a substantially tubular shape and having an engagement opening 5 is also provided. This engagement opening 5 can advantageously be associated with an access opening 6 to the compartment 3 defined in the main body 2.

In order to make the engagement between the closing body 4 and the main body 2 possible, reversible closing means 7 are also provided, arranged in the engagement opening 5 and in the said access opening 6 to associate/dissociate the closing body 4 from the main body 2.

As will be made clearer in the following description, the main body 2, the closing body 4 and the closing means 7 are uniquely made of metal, preferably aluminium alloy.

Advantageously, the material of the entire container 1 is commercially called aluminium alloy EN AW6026LF without lead. This material was chosen for its lathe workability features and for its ability not to interfere with the chemical characteristics of the products contained within the compartment 3. Moreover, this material is completely and totally recyclable.

Also in this case, the aluminium alloy described above is indicated purely by way of an example and therefore without limitation. Other materials with equivalent recyclability and lathe workability features can be used provided they are compatible with the product to be contained.

The main body 2 further comprises a neck 8 defining the aforementioned access opening 6 to the compartment 3. In this context, the closing means 7 preferably consist of a thread 9 formed on the outer surface of the neck 8 and on the inner surface of the closing body 4 at the engagement opening 5.

In this way the closing body 4 can be screwable/unscrewable onto the neck 8 to define the engagement/disengagement of the closing body 4 itself on the main body 2.

Other reversible closing systems, for example snap and mechanical interference, can be provided for the present container 1.

In accordance with the embodiment illustrated in figure 1, the neck 8 is integrally formed with the main body 2 and defines an access opening 6 having a passage section "S" equal to the cross section of the compartment 3.

In this case, the main body 2 has a closed end 10 on the opposite side of the neck 8.

Still in the embodiment of figure 1 the neck 8 has a lower width than the closing body 2. In this way, in the condition of engagement with the closing body 4, the cylindrical external surfaces of the closing body 4 and of the main body 2 have the same dimension and are adjacent to each other.

In accordance with the embodiment of figure 3, in which a mascara is shown, the neck 8 is integrally formed with the main body 2.

In this case the neck 8 defines an access opening 6 having a passage section "S" smaller than the cross-section of the compartment 3.

In this case, the main body 2 comprises an open end 10 opposite to the access opening 6.

Again, always referring to the embodiment of figure 3, a plug 11 is also provided which is constrained by mechanical interference or by screwing to the open end 10 of the main body 2. In this way, the compartment 3 is closed from below and the coupling by mechanical interference guarantees a stable engagement between the plug 11 and the main body 2.

Advantageously, also the plug 11 is made of the same material as the main body 2 and the closing body 4.

In accordance with the embodiment of figure 2, also representing a mascara, the neck 8 is made separately to the main body 2 and is engaged to the body 2 itself by mechanical interference or by screwing.

Also in this case, the neck 8 defines an access opening 6 having a passage section "S" smaller than the cross-section of the compartment 3. Moreover, in this case the main body 2 comprises a closed end 10 opposite to the access opening 6.

Preferably, the coupling by mechanical interference of the neck 8 onto the main body 2 ensures a stable engagement.

Advantageously, also the neck 8, although formed in a separate body, is obtained with the same material as the main body 2 and the closing body 4.

As illustrated in the two containers 1 for mascara of figures 2, 3, 2a, 3a, a rod 12 is also provided, also made with the same material obtained for the closing body 4 and for the main body 2.

The rod is constrained by mechanical interference or by screwing to a bottom wall 13 of the closing body 4 opposite to the engagement opening 5.

The rod 12 extends inside the neck 8 and through the aforementioned passage section "S" and has in cross-section dimensions equal to the passage section "S" itself.

Advantageously, the rod 12 has a free end 12a opposite to the aforementioned bottom wall 13 and on which is associated a metal wire 14 for supporting a plurality of fibres 15.

In particular, the metal wire 14 is braided on itself to constrain the aforementioned fibres 15, preferably made of plant material, and define an eyelash brush.

The metal wire is also made of the same material as the previously mentioned components.

The fibres 15 exhibit a greater transversal development of the passage section "S" of the neck to deform at the outlet of the compartment 3 and release excess product on the undercut of the neck 8 which defines the access opening 6.

As described above, it should be noted that each component of the container 1, i.e. main body 2, closing body 4, neck 8, plug 11 and rod 12, is made of the same material preferably starting from at least one aluminium alloy bar.

Therefore, the container does not present any other material, such as for example plastic or glassy material. The fibres 15 are the only material that differs from the aluminium alloy. Note however that these fibres 15, by their very nature, are easily removable and have a very low environmental impact.

The present invention also relates to a production method of container 1, of the type described above in a predominantly structural sense.

It should be specified that the container 1 can be obtained by any production technique while maintaining the advantages deriving from the presence of a single totally recyclable material.

Preferably, the container 1 can be made by the steps of providing at least one bar made of metal or metal alloy, preferably lead-free aluminium alloy, and turning the bar to obtain: the main body 2 described above and the closing body 4 also mentioned above.

Subsequently, the two bodies 2, 4 are anodized to obtain a surface finish processing.

Also in this case, the surface finish processings can be any, in function of the various production requirements. For example, the container 1 can be painted, printed, subjected to sublimation operations, screen printing, mechanical deformation, pad printing, etc.

The turning step comprises the sub-steps of: turning an inner area of the bar to define the compartment 3 of the main body 2 having a cylindrical shape and the access opening 6 to the compartment; and turning an outer surface of the bar to define an outer shape of the main body 2.

Similarly, the turning step further comprises the sub-steps of: turning an inner area of the bar to define the engagement opening 5 of the closing body 4; and turning an outer surface of the bar to define an outer shape of the closing body 4. Advantageously, the closing body 4 and the main body 2 can be obtained starting from the same bar or from different bars but of the same material.

In accordance with the embodiment of figures 1 and 2, the step of turning an inner area of the bar also defines a closed end 10 of the main body 2 opposite to the access opening 6.

In this case, the step of turning the bar further comprises the step of producing the neck 8 of the main body 2 separately and constraining the neck 8 to the access opening 6 of the main body 2 by mechanical interference or by screwing. Alternatively, as shown in figure 3, the step of turning an inner area of the bar also defines an open end 10 of the main body 2 opposite to the access opening 6. In this case, the neck 8 of the main body is integrally formed with the body 2 itself.

Moreover, in this embodiment the step of turning the bar further comprises the step of producing the plug 11 and constraining the plug 11 to the open end 10 of the main body 2 by mechanical interference or by screwing.

Furthermore, the method further comprises the step of producing a thread on a cylindrical outer surface of the neck 8 and producing a thread on the engagement opening 5 of the closing body 4.

In accordance with the embodiments of figures 2 and 3, the step of turning the bar further comprises the step of producing the rod 12 and constraining the rod 12 to a bottom wall 13 of the closing body 4 opposite to the engagement opening 5 by mechanical interference.

At the end of the above-described steps, or in any case, once the bars are turned to obtain all the components of the container 1, further surface processing steps may be provided for applying writings or other ornamental patterns on the respective outer surfaces.

The above-disclosed production method and the container 1 thus obtained have important advantages.

First of all, as mentioned above, the container 1 is made of a single material that can be easily disposable of and completely recyclable.

This advantage is derived from the use of a single material (aluminium alloy) to obtain all the components of the container 1. Note that the material used has remarkable qualities in terms of environmental sustainability and lathe workability. Moreover, this material is able to not alter the chemical and structural features of the product contained in the compartment and has very versatile features in terms of adaptability to the various surface finishes.

Moreover, the turning steps starting from full bars allows to adapt the production of the single container 1 to the different production requirements.

In fact, the method does not require the arrangement of moulds, but only the programming of suitable turning steps to produce products having any shapes.

In other words, the turning step of the bars turns out to be simple and very low in cost as it does not involve the study, preparation and design and production of moulds and does not necessarily have to be performed with metal sheets of predetermined thickness. Consequently, this step is very versatile in that it allows the external shaping of the container 1 to be adapted and modified in a simple and therefore inexpensive manner even for low quantities.

## Claims

1. Method for the production of a container especially for cosmetic or pharmaceutical products, **characterized in that** it comprises the steps of:
- providing at least a bar made of metal or metal alloy and
- turning said bar to obtain:
a main body (2) having a substantially tubular shape and internally defining a compartment (3) for housing the cosmetic or pharmaceutical product, and
a closing body (4) having a substantially tubular shape and having an engagement opening (5) associable with an access opening (6) to the compartment defined in said main body (2); and
- anodising said main body (2) and said closing body (4) to obtain a surface finish processing.

2. Method according to the preceding claim, **characterized in that** said turning step comprises the sub-steps of:
- turning an inner area of the bar to define said compartment (3) of the main body (2) having a cylindrical shape and said access opening (6) to the compartment (3); and
- turning an outer surface of the bar to define an outer template of the main body (2).

3. Method according to any of the preceding claims, **characterized in that** said turning step comprises the sub-steps of:
- turning an inner area of the bar to define the engagement opening (5) of the closing body (4); and
- turning an outer surface of the bar to define an outer template of the closing body (4).

4. Method according to any one of the preceding claims, **characterized in that** said closing body (4) and said main body (2) are obtained from a same bar.

5. Method according to any one of the preceding claims, **characterized in that** said step of turning an inner area of the bar further defines a closed end (10) of the main body (2) opposite to the access opening (6);
and **in that** said step of turning the bar further comprises the step of producing a neck (8) of the main body (2) and constraining the neck (8) to the access opening (6) or the main body (2) by mechanical interference or by screwing.

6. Method according to any of the claims 1 to 4, **characterized in that** said step of turning an inner area of the bar further defines an open end (10) of the main body (2) opposite to the access opening (6); said access opening (6) being defined by a neck (8) of the main body (2);
and **in that** said step of turning the bar further comprises the step of producing a plug (11) and constraining the plug (11) to the open end (10) of the main body (2) by mechanical interference or by screwing.

7. Method according to claim 5 or 6, **characterized in that** it further comprises the step of producing a thread (9) on an cylindrical outer surface of the neck (8) of the main body (2) and producing a thread (9) on the engagement opening (5) of the closing body (4); said closing body (4) being screwable onto said neck (8) of the main body (2).

8. Method according to claim 5 or 6, **characterized in that** said step of turning the bar further comprises the step of producing a rod (12) and constraining the rod (12) by mechanical interference to a bottom wall (13) of the closing body (4) opposite to the engagement opening (5); said rod (12) extending inside the neck (8) and having a cross-section equal to the passage section (S) inside the compartment (3) defined by the neck (8).

9. Method according to the previous claim, **characterized in that** it further comprises the step of applying a series of fibres (15) to a free end (12a) of the rod (12) opposite to said bottom wall (13).

10. Container especially for cosmetic or pharmaceutical products, comprising:
- a main body (2) having a substantially tubular shape and internally defining a compartment (3) for housing the cosmetic or pharmaceutical product;
- a closing body (4) having a substantially tubular shape and having an engagement opening (5) associable with an access opening (6) to the compartment (3) defined in said main body (2); and
- reversible closing means (7) arranged in said engagement opening (5) and in said access opening (6) to associate/dissociate the closing body (4) with respect to the main body (2);
**characterized in that** said main body (2), said closing body (4) and said closing means (7) are solely made of aluminium alloy.

11. Container according to the previous claim, **characterized in that** said main body comprises a neck (8) defining said access opening (6) to the compartment and **in that** said closing means (7) comprise a thread (9) formed on the outer surface of the neck (8) and on the inner surface of the closing body (4) at the engagement opening (5).

12. Container according to the previous claim, **characterized in that** said neck (8) is integrally produced with the main body (2) and **in that** the main body (2) comprises an open end (10) opposite to the access opening (6) and **in that** it further comprises a plug (11) constrained to the open end (10) of the main body (2) by mechanical interference or by screwing.

13. Container according to claim 11, **characterized in that** said neck (8) is engaged to the access opening (6) of the main body (2) by mechanical interference or by screwing.

14. Container according to claim 11, **characterized in that** it further comprises a rod (12) uniquely made of aluminium alloy and constrained by mechanical interference or by screwing to a bottom wall (13) of the closing body (4) opposite to the engagement opening (5); said rod (12) extending inside the neck (8) and having a cross-section equal to the passage section (S) inside the compartment (3) defined by the neck (8).

15. Container according to the previous claim, **characterized in that** it further comprises a series of fibres (15) engaged with a free end (12a) of the rod (12) opposite to said bottom wall (13); said fibres (15) having a greater transverse extension of the passage section (S) of the neck (8).
